# EUROPÄISCHE PATENTSCHRIFT

(11) **EP 3 065 958 B1**
(45) Veröffentlichungstag und Bekanntmachung des Hinweises auf die Patenterteilung: **23.10.2019**
(21) Anmeldenummer: 14806550.1
(22) Anmeldetag: 05.11.2014
(51) Int. Cl.: B60G 3/20, B60B 27/00, B60G 7/00

(54) **RADAUFHÄNGUNG FÜR EIN KRAFTFAHRZEUG**
WHEEL SUSPENSION FOR A MOTOR VEHICLE
SUSPENSION DE ROUE POUR VÉHICULE AUTOMOBILE

(30) Priorität: 05.11.2013 DE 102013222442
(43) Veröffentlichungstag der Anmeldung: 14.09.2016
(73) Patentinhaber: BRIST AXLE SYSTEMS S.R.L., 25018 Montichiari (IT)
(72) Erfinder: BONERA, Danilo, 25060 Collebeato (BS) (IT)
(74) Vertreter: Zermani, Umberto
(86) Internationale Anmeldenummer: PCT/EP2014/073780
(87) Internationale Veröffentlichungsnummer: WO 2015/067638

(56) Entgegenhaltungen:
- EP-A1- 0 561 437
- EP-A1- 0 680 836
- EP-A1- 0 799 723
- EP-B1- 2 207 690
- WO-A1-2011/070387
- DE-A1- 3 721 737
- DE-A1-102008 021 786

## Beschreibung

Die vorliegende Erfindung betrifft eine Radaufhängung für ein Kraftfahrzeug, insbesondere für ein lenkbares Antriebsrad gemäß dem Oberbegriff von Anspruch 1.

Herkömmlich unterscheidet man bei Einzelradaufhängungen, wie sie die vorliegende Anmeldung besonders betrifft, zwischen einem ersten Typ mit Achsschenkelbolzen (Kingpin) und einem zweiten Typ mit Kugelgelenk (Ball Joint).

Gemäß dem ersten Typ ist ein Achsschenkelträger über zwei Kreuzgelenke an einem oberen und einem unteren Querlenker angeschlossen, wobei einer oder beide Querlenker auch als Dreieckslenker ausgeführt sein können, und wobei jedes Kreuzgelenk zwei in Richtung des Kraftflusses vom Achsschenkelträger auf den Querlenker hintereinander positionierte Drehgelenke (Scharniergelenke) aufweist, die jeweils einen Gelenkbolzen oder Gelenkstift aufweisen, durch dessen Mittelachse die Drehachse verläuft. Dabei fällt die Drehachse der beiden dem Achsschenkelträger zugeordneten Drehgelenke, das heißt jener Drehgelenke, die im Kraftfluss vom Achsschenkelträger auf die Querlenker vorangestellt sind, zu einer gemeinsamen Drehachse zusammen und entsprechend sind die beiden Gelenkbolzen oder Gelenkstifte dieser ersten Drehgelenke einteilig miteinander ausgeführt oder aus mehreren mechanisch fest miteinander verbunden und koaxial zueinander positionierten Teilen zusammengefügt. Dieser gemeinsame Gelenkbolzen beziehungsweise Gelenkstift wird auch als Kingpin bezeichnet. Aufgrund des vorgesehenen oberen Querlenkers und unteren Querlenkers wird diese Radaufhängung auch als Doppelquerlenker-Aufhängung bezeichnet.

Bei der Radaufhängung des zweiten Typs, die ebenfalls als Doppelquerlenker-Aufhängung ausgeführt sein kann, sind die Lagerstellen, über welche die Querlenker an dem Achsschenkelträger angelenkt sind, als Kugelgelenk ausgeführt. Damit kann auf die Positionierung zweier Drehgelenke im Kraftfluss hintereinander verzichtet werden, um die Funktionalität eines Kreuzgelenkes oder sogar eines Gelenkes mit noch mehr Freiheitsgraden zu erreichen.

Zum druckschriftlichen Stand der Technik wird auf die folgenden Dokumente verwiesen:
EP 2 207 690 B1
EP 0 979 769 B1
EP 0 402 777 B1
EP 2 441 602 A1
DE 10 2008 021 786 A1
DE 195 18 154 C2
DE 43 43 525 A1.

Bei der Radaufhängung des erstgenannten Typs ergeben sich die Vorteile einer vergleichsweise steifen Konstruktion mit geringen Reibungskräften beim Einfedern und Lenken des mittels der Radaufhängung aufgehängten Rades. Als nachteilig sind das hohe Gewicht und das vergleichsweise große Volumen anzusehen.

Beim zweitgenannten Typ der Radaufhängung kann zwar eine etwas leichtere und kompaktere Bauform erreicht werden, jedoch treten beim Einfedern und Lenken des aufgehängten Rades größere Reibungskräfte auf, die zu einer Verkürzung der Lebensdauer führen.

DE 37 21 737 A1 und EP 0 799 723 A1 zeigen einen Achsschenkelträger mit einer Radnabe mit einer äußeren Lagerfläche zur Aufnahme eines Rades und einer radial innerhalb dieser Lagerfläche angeordneten Durchgangsöffnung.

DE 10 2008 021 786 A1 zeigt eine Doppelquerlenker-Aufhängung für ein lenkbares Rad mit Kreuzgelenke zwischen dem Radträger und den Querlenkern. Die beiden radträgerseitigen Lagerzapfen sind durch einen Verbindungsbolzen miteinander verbunden.

DE 2 233 391 A zeigt eine Doppelquerlenker-Aufhängung für ein lenkbares Rad mit Kreuzgelenke zwischen dem Radträger und den Querlenkern. Die beiden radträgerseitigen Lagerzapfen sind mit einem deutlichen Abstand zueinander auf der Lenkachse positioniert.

Der vorliegenden Erfindung liegt die Aufgabe zugrunde, eine Radaufhängung, insbesondere Einzelradaufhängung anzugeben, welche die Vorteile der zuvor genannten Radaufhängungstypen vereint und zugleich die Nachteile weitgehend vermeidet. Insbesondere soll eine Radaufhängung für ein Kraftfahrzeug, beispielsweise Lastkraftwagen, Baumaschine oder sonstiges schweres Spezialfahrzeug angegeben werden, bei dem eine steife Konstruktion mit geringem Gewicht und zugleich geringen Reibungskräften mit verlängerter Lebensdauer erreicht wird.

Die erfindungsgemäße Aufgabe wird durch eine Radaufhängung für ein Kraftfahrzeug mit den Merkmalen des Anspruchs 1 gelöst. In den abhängigen Ansprüchen sind vorteilhafte und besonders zweckmäßige Ausgestaltungen der Erfindung angegeben.

Die erfindungsgemäße Radaufhängung für ein Kraftfahrzeug, die als Einzelradaufhängung ausgeführt ist und für ein lenkbares Antriebsrad des Kraftfahrzeugs ausgeführt ist, weist einen Achsschenkelträger und zwei Querlenker, einen oberen Querlenker und einen unteren Querlenker auf. Die Querlenker sind an ihrem ersten Ende um eine horizontale Achse schwenkbar gelagert und mit diesem Ende beispielsweise an einem Fahrzeugrahmen oder einer Fahrzeugkarosserie oder einem anderen tragenden Bauteil des Kraftfahrzeugs angeschlossen.

Jeder der beiden Querlenker, ist an seinem zweiten Ende, das entsprechend auf der abgewandten Seite des ersten Endes positioniert ist, unter Ausbildung einer Lagerstelle für den Achsschenkelträger an dem Achsschenkelträger angelenkt.

Der Achsschenkelträger weist eine Radnabe mit einer äußeren Lagerfläche zur Aufnahme eines über der Radnabe umlaufenden Fahrzeugrades auf.

Beispielsweise ist eine Radaufnahme vorgesehen, die mittels eines Lagers, insbesondere Wälzlagers, auf der äußeren Lagerfläche der Radnabe gelagert ist, sodass sie auf der stationären beziehungsweise nicht umlaufenden Radnabe umlaufen kann.

Erfindungsgemäß ist nun in der Radnabe radial innerhalb der äußeren Lagerfläche eine Durchgangsöffnung zur Aufnahme einer mit dem Fahrzeugrad unlaufenden Flanschwelle vorgesehen.

Jede Lagerstelle, in welcher die Querlenker an dem Achsschenkelträger angelenkt sind, weist ein Kreuzgelenk mit zwei senkrecht, oder im Wesentlichen senkrecht aufeinander stehenden Drehachsen auf. Der Winkel zwischen den Drehachsen beträgt beispielsweise zwischen 85° und 95°, insbesondere zwischen 88° und 92°. Bei zwei, insbesondere parallelen, Querlenkern weist jeder der Querlenker eine entsprechende Lagerstelle mit einem Kreuzgelenk mit zwei senkrecht aufeinander stehenden Drehachsen auf. Generell gilt bei der vorliegenden Erfindung, dass das Merkmal der senkrecht aufeinander stehenden Achsen nicht auf einen exakten Winkel von 90° beschränkt ist, sondern dass insbesondere aufgrund der maschinellen Bearbeitung der Bauteile Abweichungen um einige Grad, beispielsweise um 2 bis 5 Grad möglich sind.

Besonders günstig und erfindungsgemäß sind in den Kreuzgelenken jeweils zwei im Kraftfluss vom Achsschenkelträger zum ersten Ende des wenigstens einen Querlenkers hintereinander positionierte Drehgelenke vorgesehen, welche die im Wesentlichen senkrecht aufeinander stehenden Drehachsen bilden, nämlich ein erstes Drehgelenk, dessen Drehachse senkrecht auf einer in Horizontalrichtung verlaufenden Linie steht, und ein zweites Drehgelenk, dessen Drehachse parallel zur horizontalen Achse der schwenkbaren Lagerung am ersten Ende des Querlenkers beziehungsweise des jeweiligen Querlenkers verläuft.

Aufgrund ihrer Verschwenkbewegung über jeweils einer Drehachse können die Drehgelenke auch als Scharniergelenke bezeichnet werden.

Alle ersten Drehgelenke werden durch eine Bohrung im Achsschenkelträger und einen im zweiten Drehgelenk an dem Querlenker angelenkten Zapfen gebildet. Bevorzugt wird dabei der Zapfen durch zwei in Richtung der Drehachse nebeneinander positionierte Wälzlager in der Bohrung gelagert. Die Wälzlager können dabei verschiedene Innen- und/oder Außendurchmesser aufweisen, insbesondere wenn der Außendurchmesser des jeweiligen Zapfens im Bereich seiner Lagerung variiert.

Günstig ist, wenn das zweite Drehgelenk durch eine Gelenkgabel am zweiten Ende des Querlenkers zusammen mit einem Gelenkbolzen, der mit zwei Wälzlagern in der Gelenkgabel gelagert ist, gebildet wird, wobei der Gelenkbolzen den Zapfen trägt und insbesondere formschlüssig und/oder mit einer Presspassung in diesen eingefügt ist.

Wie dargelegt, ist die Radaufhängung erfindungsgemäß als Doppelquerlenker-Radaufhängung ausgeführt, umfassend einen ersten oberen und einen zweiten unteren Querlenker, die jeweils entsprechend mit ihrem ersten Ende um eine horizontale Achse schwenkbar gelagert und mit ihrem zweiten Ende unter Ausbildung der Lagerstelle an dem Achsschenkelträger angelenkt sind.

Wenn außen auf der Radnabe eine Radaufnahme vorgesehen ist, so kann eine sich innerhalb der Durchgangsöffnung der Radnabe erstreckende Flanschwelle an einem ersten axialen Ende axial außerhalb der Radnabe einen Radialflansch aufweisen, der stirnseitig an der Radaufnahme angeschlossen, insbesondere angeschraubt ist, sodass die Flanschwelle und die Radaufnahme gemeinsam umlaufen, wenn die Flanschwelle durch einen entsprechenden Antriebsstrang des Kraftfahrzeugs angetrieben wird, insbesondere mittels eines Verbrennungsmotors und/oder Elektromotors. Selbstverständlich wäre eine solche Triebverbindung zusätzlich oder alternativ auch am zweiten axialen Ende der Flanschwelle möglich.

Auch ein Anschluss nicht unmittelbar auf der Stirnseite, sondern im Bereich der Stirnseite, beispielsweise radial innen ist möglich.

Besonders günstig weist die Flanschwelle an ihrem zweiten, dem ersten axialen Ende entgegengesetzten Ende einen zweiten Radialflansch auf, der sich innerhalb oder axial außerhalb des Achsschenkelträgers erstreckt und an welchem die Antriebsleistung des Antriebsstrangs des Kraftfahrzeugs eingespeist werden kann. Entsprechend ist der zweite Radialflansch als Antriebsflansch mit Anschlüssen zum Einleiten von Antriebsleistung einer Antriebswelle, insbesondere Kardanwelle, ausgeführt. Anstelle eines sich radial nach außen über den Außendurchmesser der Flanschwelle hinweg erstreckenden Flansches kann auch eine andere Möglichkeit zum Anschluss einer Antriebswelle vorgesehen sein, oder die Flanschwelle kann einteilig mit der Antriebswelle ausgeführt sein.

Die bei einer Ausführungsform der Radaufhängung als Doppelquerlenker-Aufhängung an den Querlenkern angelenkten Zapfen sind vorteilhaft über eine gemeinsame Drehachse verdrehbar und mit Abstand zueinander auf entgegengesetzten Seiten teilweise oder vollständig radial außerhalb des zweiten Radialflansches der Flanschwelle positioniert. Günstig ist hierbei, wenn die beiden Zapfen erfindungsgemäß nicht zu einem gemeinsamen Achsschenkelbolzen vereint oder über Verbindungsbolzen mechanisch miteinander verbunden sind, sondern getrennt und mit Abstand zueinander frei von einer direkten mechanischen Verbindung vorgesehen sind. Somit entfällt eine direkte mechanische, eine Drehbewegung von einem Zapfen auf den anderen Zapfen übertragende Verbindung. Allein eine indirekte mechanische Verbindung über den Achsschenkelträger und/oder die beiden Querlenker und ein dazwischen positioniertes Fahrzeugbauteil, beispielsweise den Fahrzeugrahmen, ist dann vorgesehen.

Durch die erfindungsgemäße Ausführungsform der Radaufhängung kann eine Achslast von zehn Tonnen oder mehr erreicht werden, bei einem Lenkwinkel von 20° oder mehr. Die Radaufhängung weist ein geringes Gewicht auf und eingeleitete Kräfte werden ideal verteilt. Aufgrund der vorteilhaft vorgesehen Wälzlager, wobei je Gelenk vorteilhaft zwei Wälzlager nebeneinander auf der Drehachse vorgesehen sind, können Reibungskräfte minimiert werden und unerwünschte Verformungen innerhalb der Radaufhängung vermieden werden.

Die Erfindung soll nachfolgend anhand eines Ausführungsbeispiels und den beiden Figuren exemplarisch beschrieben werden. Es zeigen:
- Figur 1: eine erfindungsgemäß gestaltete Radaufhängung in einer seitlichen, teilweise geschnittenen Ansicht;
- Figur 2: die Radaufhängung aus der Figur 1 in einer Ansicht entlang der Drehachse des Fahrzeugrades von hinten auf die Fahrzeugfelge betrachtet.

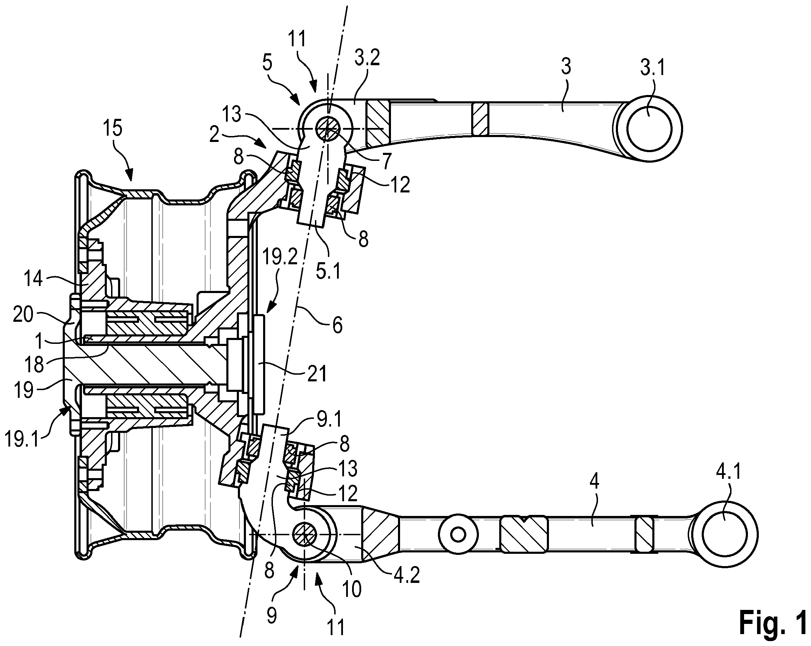

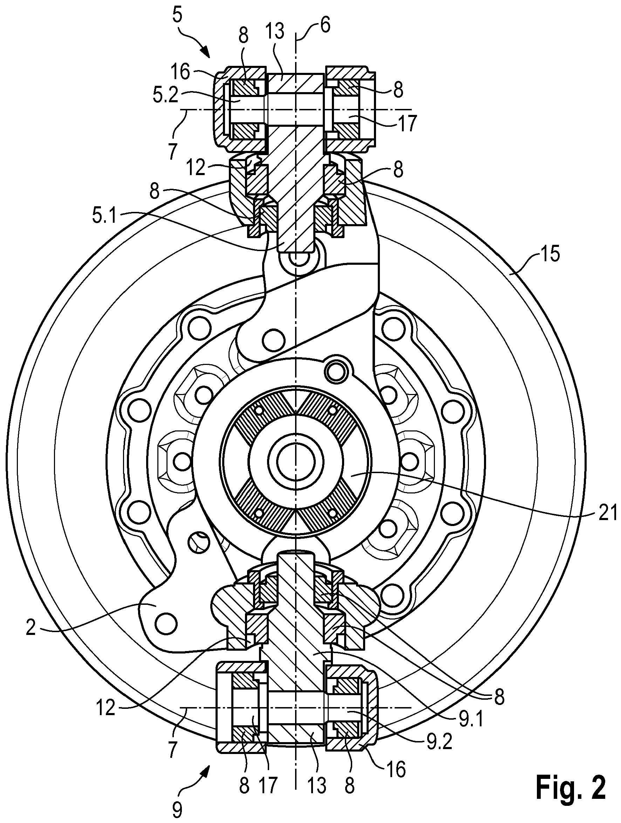

Die in der Figur 1 dargestellte Radaufhängung für ein Kraftfahrzeug, hier für ein lenkbares mittels eines nicht näher dargestellten Fahrzeugantriebsstrangs angetriebenes Fahrzeugrad, weist eine Radnabe 1 auf, die eine Radaufnahme 14 drehbar trägt, an welcher wiederum die Felge 15 angeschraubt ist. Die Radnabe 1 wird durch einen Achsschenkelträger 2 getragen und ist im dargestellten Ausführungsbeispiel einteilig beziehungsweise stoffschlüssig mit dem Achsschenkelträger 2 ausgeführt. Der Achsschenkelträger 2 wird wiederum durch zwei Querlenker 3, 4 getragen, welche jeweils mit ihrem ersten Ende 3.1, 4.1 um eine horizontale Achse verschwenkbar am Fahrzeug (nicht dargestellt), beispielsweise dessen Fahrzeugrahmen angelenkt sind. An ihrem zweiten Ende 3.2, 4.2 sind die beiden Querlenker - der erste Querlenker 3, der oberhalb des Achsschenkelträgers 2 angeordnet ist, und der zweite Querlenker 4, der unterhalb des Achsschenkelträger 2 angeordnet ist - unter Ausbildung jeweils einer Lagerstelle 11 mit jeweils einem Kreuzgelenk 5, 9 am Achsschenkelträger 2 angelenkt. Das obere Kreuzgelenk weist die beiden zumindest im Wesentlichen senkrecht aufeinander stehenden Drehachsen 6, 7 auf und das untere Kreuzgelenk 9 weist die beiden zumindest im Wesentlichen senkrecht aufeinander stehenden Drehachsen 6, 10 auf, siehe hierzu auch die Darstellung in der Figur 2.

Das obere Kreuzgelenk 5 wird durch das erste Drehgelenk 5.1 und das zweite Drehgelenk 5.2 gebildet. Das untere Kreuzgelenk 9 wird durch das erste Drehgelenk 9.1 und das zweite Drehgelenk 9.2 gebildet. Die beiden Drehgelenke 5.1, 5.2, 9.1, 9.2 sind jeweils in Kraftflussrichtung vom Antriebsrad auf das Fahrzeug gesehen hintereinander positioniert, wobei das zweite Drehgelenk 5.2, 9.2 dem ersten Drehgelenk 5.1, 9.1 folgt.

Die beiden ersten Drehgelenke 5.1, 9.1 weisen eine gemeinsame Drehachse 6 auf, über welche der Achsschenkelträger 2 bei der Lenkbewegung des Fahrzeugrades (siehe die Felge 15) verschwenkt wird. Beim Einfedern (die Feder und der Stoßdämpfer der Radaufhängung sind nicht gezeigt) wird das erste Kreuzgelenk 5 im zweiten Drehgelenk 5.2 über der Drehachse 7 verschwenkt und das zweite Kreuzgelenk 9 wird im zweiten Drehgelenk 9.2 über der Drehachse 10 verschwenkt.

Zur Ausbildung des ersten Drehgelenkes 5.1 des ersten (oberen) Kreuzgelenkes 5 ist ein Zapfen 13 in einer Bohrung 12 des Achsschenkelträgers 2 aufgenommen und in diesem durch zwei entlang der Drehachse 6 nebeneinander positionierte Wälzlager 8 im Achsschenkelträger 2 beziehungsweise dessen Bohrung 12 gelagert. Entsprechendes gilt für den Zapfen 13 des unteren Kreuzgelenks 9.

Zur Ausbildung des zweiten Drehgelenks 5.2 des oberen Kreuzgelenks 5 weist der Zapfen 13 einen Gelenkbolzen 17 auf, der im gezeigten Ausführungsbeispiel in einer Presspassung oder Untermaßpassung in einer Bohrung des Zapfens 13 eingesetzt ist. Der Gelenkbolzen 17 wird an seinen beiden axialen Enden jeweils mittels eines Wälzlagers 8 in jeweils einer Gelenkgabelhälfte der Gelenkgabel 16 des oberen Querlenkers 3 getragen. Entsprechendes gilt für das zweite Drehgelenk 9.2 des unteren Kreuzgelenkes 9, siehe auch hier die Gelenkgabel 16, die Wälzlager 8 und den Gelenkbolzen 17.

Wie man in den Figuren erkennen kann, sind die beiden Zapfen 13 mit einem deutlichen Abstand zueinander auf der Drehachse 6 positioniert. Es fehlt jegliche direkte Verbindung zwischen den beiden Zapfen 13. Eine indirekte Verbindung wird natürlich über den Achsschenkelträger 2 erreicht, da dieser beide Zapfen trägt, und über beispielsweise den Fahrzeugrahmen, an dem die beiden Querlenker 3, 4 mit ihren ersten Enden 3.1, 4.1 angeschlossen sind. Insbesondere fehlt jedoch eine unmittelbare drehfeste Verbindung zwischen den beiden Zapfen 13, das heißt dem Zapfen 13 des oberen Kreuzgelenkes 5 und dem Zapfen 13 des unteren Kreuzgelenkes 9.

Innerhalb einer Durchgangsöffnung 18 in der Radnabe 1 ist eine Flanschwelle 19 vorgesehen, die an ihrem ersten axialen Ende 19.1, das den beiden Querlenkern 3, 4 abgewandt ist, einen sich axial außerhalb der Radnabe 1 erstreckenden Radialflansch 20 aufweist. Dieser Radialflansch 20, der sich radial nach außen bis auf die Radaufnahme 14 erstreckt, ist stirnseitig an der Radaufnahme 14 angeschlossen, beispielsweise angeschraubt, siehe die dargestellte Flanschverschraubung.

An ihrem zweiten axialen Ende 19.2 weist die Flanschwelle 19 einen zweiten Radialflansch 21 auf, der sich im gezeigten Ausführungsbeispiel in Axialrichtung außerhalb des Achsschenkelträgers 2 erstreckt und der als Antriebsflansch zum Einleiten von Antriebsleistung des hier nicht mehr dargestellten Fahrzeugantriebsstrangs ausgebildet ist.

Im gezeigten Ausführungsbeispiel ist der Innendurchmesser der Durchgangsöffnung 18 in der Radnabe 1 größer als der Außendurchmesser des gegenüberstehenden axialen Abschnitts der Flanschwelle 19, sodass die Flanschwelle 19 berührungslos innerhalb der Radnabe 1 beziehungsweise des Achsschenkelträgers 2 umläuft.

## Patentansprüche

1. Radaufhängung für ein lenkbares Antriebsrad bei einem Kraftfahrzeug,
1.1 mit einem Achsschenkelträger (2);
1.2 dass die Radaufhängung als Doppelquerlenker-Aufhängung ausgeführt ist, umfassend einen ersten oberen Querlenker (3) und einen zweiten unteren Querlenker (4), die jeweils entsprechend mit ihrem ersten Ende (3.1, 4.1) um eine horizontale Achse schwenkbar gelagert und mit ihrem zweiten Ende (3.2, 4.2) unter Ausbildung der Lagerstelle (11) für den Achsschenkelträger (2) bildet, an dem Achsschenkelträger (2) angelenkt sind;
wobei
1.3 der Achsschenkelträger (2) eine Radnabe (1) mit einer äußeren Lagerfläche (1.1) zur Aufnahme eines über der Radnabe (1) umlaufenden
Fahrzeugrades aufweist; wobei
1.4 die Radnabe (1) radial innerhalb der äußeren Lagerfläche (1.1) eine
Durchgangsöffnung (18) zur Aufnahme einer mit dem Fahrzeugrad umlaufenden Flanschwelle (19) aufweist
wobei jeder Lagerstelle (11) ein Kreuzgelenk (5, 9) mit zwei senkrecht aufeinander stehenden Drehachsen (6, 7, 10) aufweist
**dadurch gekennzeichnet, dass** das Kreuzgelenk (5, 9) zwei im Kraftfluss vom Achsschenkelträger (2) zum ersten Ende (3.1,4.1) des wenigstens einen Querlenkers (3, 4) hintereinander positionierte Drehgelenke aufweist, welche die senkrecht aufeinander stehenden Drehachsen (6, 7, 10) bilden, nämlich ein erstes Drehgelenk (5.1, 9.1), dessen Drehachse (6) senkrecht auf einer in Horizontalrichtung verlaufenden Linie steht, und ein zweites Drehgelenk (5.2, 9.2), dessen Drehachse (7, 10) parallel zur horizontalen Achse der schwenkbaren Lagerung am ersten Ende (3.1, 4.1) des Querlenkers (3, 4) verläuft
wobei jeder erste Drehgelenk (5.1, 9.1) wird durch eine Bohrung im Achsschenkelträger und einen im zweiten Drehgelenk an dem Querlenker angelenkten Zapfen (13) gebildet und sind die beiden Zapfen (13) mit einemdeutlichen Abstand zueinander auf der Drehachse (6) positioniert, Ohne direkte Verbindung zwischen den beiden Zapfen (13).

2. Radaufhängung gemäß Anspruch 1, **dadurch gekennzeichnet, dass** das erste Drehgelenk (5.1, 9.1) durch eine Bohrung (12) im Achsschenkelträger (2) und einen im zweiten Drehgelenk (5.2, 9.2) an dem Querlenker (3, 4) angelenkten Zapfen (13) gebildet wird, wobei der Zapfen (13) durch zwei auf der Drehachse (6) nebeneinander positionierte Wälzlager (8) in der Bohrung (12) gelagert ist.

3. Radaufhängung gemäß Anspruch 2, **dadurch gekennzeichnet, dass** das zweite Drehgelenk (5.2, 9.2) durch eine Gelenkgabel (16) am zweiten Ende (3.2, 4.2) des Querlenkers (3, 4) zusammen mit einem Gelenkbolzen (17), der mit zwei Wälzlagern (8) in der Gelenkgabel (16) gelagert ist, gebildet wird, wobei der Gelenkbolzen (17) den Zapfen (13) trägt und insbesondere formschlüssig und/oder mit einer Presspassung in diesen eingefügt ist.

4. Radaufhängung gemäß einem der Ansprüche 1 bis 3, ferner umfassend eine Radaufnahme (14), die mittels eines Lagers, insbesondere Wälzlagers, auf der äußeren Lagerfläche (1.1) der Radnabe (1) gelagert ist und die Gewindezapfen oder Innengewinde zum Aufschrauben einer Felge (15) des Fahrzeugrades aufweist, **dadurch gekennzeichnet, dass** eine sich innerhalb der Durchgangsöffnung (18) der Radnabe (1) erstreckende Flanschwelle (19) an einem ersten axialen Ende (19.1) axial außerhalb der Radnabe (1) einen Radialflansch (20) aufweist, der stirnseitig an der Radaufnahme (14) angeschlossen, insbesondere angeschraubt ist, sodass die Flanschwelle (19) und die Radaufnahme (14) gemeinsam umlaufen.

5. Radaufhängung gemäß Anspruch 4, **dadurch gekennzeichnet, dass** die Flanschwelle (19) an ihrem zweiten, dem ersten axialen Ende (19.1) entgegengesetzten zweiten Ende (19.2) einen zweiten Radialflansch (21) aufweist, der sich innerhalb oder axial außerhalb des Achsschenkelträgers (2) erstreckt.

6. Radaufhängung gemäß Anspruch 5, **dadurch gekennzeichnet, dass** der zweite Radialflansch (21) als Antriebsflansch mit Anschlüssen zum Einleiten von Antriebsleistung einer Antriebswelle, insbesondere Kardanwelle, ausgeführt ist.

7. Radaufhängung gemäß einem der Ansprüche 1 bis 6, **dadurch gekennzeichnet, dass** die an den Querlenkern (3, 4) angelenkten Zapfen (13) über eine gemeinsame Drehachse (6) verdrehbar sind, und mit Abstand zueinander, insbesondere auf entgegengesetzten Seiten radial außerhalb des zweiten Radialflansches (21) der Flanschwelle (19) positioniert sind.

## Claims

1. A wheel suspension for a steerable drive wheel in a motor vehicle,
1.1 with a stub axle support (2);
1.2 the wheel suspension is configured as a double-wishbone suspension, comprising a first upper wishbone (3) and a second lower wishbone (4), which are respectively positioned correspondingly with the first end (3.1, 4.1) thereof pivotable about a horizontal axis and are hinged with the second end (3.2, 4.2) thereof at the stub axle support (2) with configuration of the bearing part (11) for the stub axle support (2); wherein
1.3 the stub axle support (2) has a wheel hub (1) with an outer bearing surface (1.1) for receiving a vehicle wheel that turns by means of the wheel hub (1); wherein 1.4 the wheel hub (1) has radially inside the outer bearing surface (1.1) a through opening (18) for receiving a flange shaft (19) that turns with the vehicle wheel,
wherein each bearing part (11) has a universal joint (5, 9) with two axes of rotation (6, 7, 10) that are vertical to one another,
**characterized in that** the universal joint (5, 9) has two swivel joints that are positioned behind one another in the flux of force from the stub axle support (2) to the first end (3.1, 4.1) of the at least one wishbone (3, 4), which constitute the axes of rotation (6, 7, 10) that are vertical to one another, namely a first swivel joint (5.1, 9.1), the axis of rotation (6) of which is vertical on a line running in a horizontal direction, and a second swivel joint (5.2, 9.2), the axis of rotation (7, 10) of which runs parallel to the horizontal axis of the pivoting point at the first end (3.1, 4.1) of the wishbone (3, 4),
wherein each first swivel joint (5.1, 9.1) is formed by a hole in the stub axle support and a pin (13) hinged in the second swivel joint on the wishbone and both pins (13) are positioned at a clear distance from one another on the axis of rotation (6) without a direct connection between the two pins (13).

2. The wheel suspension according to claim 1, **characterized in that** the first swivel joint (5.1, 9.1) is formed by a hole (12) in the stub axle support (2) and a pin (13) hinged in the second swivel joint (5.2, 9.2) on the wishbone (3, 4), wherein the pin (13) is positioned in the hole (12) by two roller bearings (8) positioned next to one another on the axis of rotation (6) .

3. The wheel suspension according to claim 2, **characterized in that** the second swivel joint (5.2, 9.2) is formed by a joint yoke (16) on the second end (3.2, 4.2) of the wishbone (3, 4) together with a hinge bolt (17), that is positioned with two roller bearings (8) in the joint yoke (16), wherein the hinge bolt (17) carries the pin (13) and, in particular, is inserted into the latter with form-fitting and/or with a tight fitting.

4. The wheel suspension according to one of claims 1 to 3, further comprising a wheel mount (14) that is positioned on the outer bearing surface (1.1) of the wheel hub (1) by a bearing, in particular a roller bearing, and has threaded pins or inner thread for screwing onto a rim (15) of the vehicle wheel, **characterized in that** a flange shaft (19) extending inside the through opening (18) of the wheel hub (1) at a first axial end (19.1), axially outside the wheel hub (1), has a radial flange (20) that is connected, in particular screwed on, at the front of the wheel receptacle (14), so that the flange shaft (19) and the wheel receptacle (14) turn together.

5. The wheel suspension according to claim 4, **characterized in that** the flange shaft (19) at its second end (19.2) opposite the first axial end (19.1) has a second radial flange (21), that extends inside or axially outside the stub axle support (2).

6. The wheel suspension according to claim 5, **characterized in that** the second radial flange (21) is configured as a drive flange with connections for introducing the drive power of a drive shaft, in particular a cardan shaft.

7. The wheel suspension according to one of claims 1 to 6, **characterized in that** the pins (13) hinged on the wishbones (3, 4) are rotatable via a common axis of rotation (6) and are positioned spaced apart from one another, in particular on opposite sides radially outside the second radial flange (21) of the flange shaft (19) .

## Revendications

1. Suspension de roue pour une roue motrice directrice dans un véhicule automobile,
1.1 dotée d'un support (2) de porte-fusée ;
1.2 la suspension de roue est configurée comme une suspension à double triangle de suspension comprenant un premier triangle de suspension (3) supérieur et un second triangle de suspension (4) inférieur, étant positionnés respectivement en correspondance de leur première extrémité (3.1, 4.1) pouvant pivoter autour d'un axe horizontal et montés articulés à leur seconde extrémité (3.2, 4.2) avec la configuration de la partie d'appui (11) destinée au support (2) de porte-fusée en correspondance du support (2) de porte-fusée ;
dans laquelle
1.3 le support (2) de porte-fusée comporte un moyeu de roue (1) doté d'une surface d'appui (1.1) externe pour recevoir une roue de véhicule tournant au moyen du moyeu de roue (1) ; dans laquelle
1.4 le moyeu de roue (1) comporte radialement à l'intérieur de la surface d'appui (1.1) externe une ouverture passante (18) pour recevoir un arbre à bride (19) tournant avec la roue de véhicule,
dans laquelle chaque partie d'appui (11) comporte un joint universel (5, 9) avec deux axes de rotation (6, 7, 10) étant réciproquement verticaux,
**caractérisée en ce que** le joint universel (5, 9) comporte deux joints articulés étant positionnés l'un derrière l'autre dans le flux de force du support (2) de porte-fusée à la première extrémité (3.1, 4.1) de l'au moins un triangle de suspension (3, 4), qui constituent les axes de rotation (6, 7, 10) étant verticaux réciproquement, à savoir un premier joint articulé (5.1, 9.1) dont l'axe de rotation (6) est vertical sur une ligne allant dans une direction horizontale, et un second joint articulé (5.2, 9.2) dont l'axe de rotation (7, 10) est parallèle à l'axe horizontal du point pivotant en correspondance de la première extrémité (3.1, 4.1) du triangle de suspension (3, 4),
dans laquelle chaque premier joint articulé (5.1, 9.1) est formé par un orifice dans le support de porte-fusée et une broche (13) montée articulée dans le second joint articulé sur le triangle de suspension et les deux broches (13) sont positionnées à une distance libre l'une de l'autre sur l'axe de rotation (6) sans un raccordement direct entre les deux broches (13).

2. Suspension de roue selon la revendication 1, **caractérisée en ce que** le premier joint articulé (5.1, 9.1) est formé par un orifice (12) dans le support (2) de porte-fusée et une broche (13) montée articulée dans le second joint articulé (5.2, 9.2) sur le triangle de suspension (3, 4), dans laquelle la broche (13) est positionnée dans l'orifice (12) par deux paliers à roulement (8) positionnés l'un à côté de l'autre sur l'axe de rotation (6).

3. Suspension de roue selon la revendication 2, **caractérisée en ce que** le second joint articulé (5.2, 9.2) est formé par une fourche à joint (16) sur la seconde extrémité (3.2, 4.2) du triangle de suspension (3, 4) conjuguée à un boulon d'articulation (17) étant positionné avec deux paliers à roulement (8) dans la fourche à joint (16), dans laquelle le boulon d'articulation (17) porte la broche (13) et, en particulier, est introduit dans la dernière par liaison de forme et/ou un ajustage serré.

4. Suspension de roue selon l'une des revendications de 1 à 3, comprenant de plus un support de roue (14) qui est positionné sur la surface d'appui (1.1) externe du moyeu de roue (1) par un palier, en particulier un palier à roulement, et qui comporte des broches filetées ou filetage interne pour visser une jante (15) de la roue de véhicule, **caractérisée en ce qu'**un arbre à bride (19), se prolongeant à l'intérieur de l'ouverture passante (18) du moyeu de roue (1) en correspondance d'une première extrémité axiale (19.1), axialement à l'extérieur du moyeu de roue (1), comporte une bride radiale (20) étant reliée, en particulier vissée, à l'avant du support de roue (14) de sorte que l'arbre à bride (19) et le support de roue (14) tournent ensemble.

5. Suspension de roue selon la revendication 4, **caractérisée en ce que** l'arbre à bride (19), en correspondance de sa seconde extrémité (19.2) opposée à la première extrémité (19.1) axiale, comporte une seconde bride radiale (21) se prolongeant à l'intérieur ou axialement à l'extérieur du support (2) de porte-fusée.

6. Suspension de roue selon la revendication 5, **caractérisée en ce que** la seconde bride radiale (21) est configurée comme une bride d'entraînement dotée de raccordements pour introduire une puissance d'entraînement d'un arbre d'entraînement, en particulier un arbre à cardan.

7. Suspension de roue selon l'une des revendications de 1 à 6, **caractérisée en ce que** les broches (13), montées articulées sur les triangles de suspension (3, 4), peuvent pivoter via un axe commun de rotation (6) et sont positionnées espacées l'une de l'autre, en particulier sur des côtés opposés radialement à l'extérieur de la seconde bride radiale (21) de l'arbre à bride (19).
